# EUROPÄISCHE PATENTSCHRIFT

(11) **EP 1 348 597 B1**
(45) Veröffentlichungstag und Bekanntmachung des Hinweises auf die Patenterteilung: **28.06.2006**
(21) Anmeldenummer: 03005652.7
(22) Anmeldetag: 13.03.2003
(51) Int. Cl.: B60R 9/04

(54) **Dach-Trägersystem für ein Kraftfahrzeug**
Roof rack for a vehicle
Porte-bagages de toit de véhicule

(30) Priorität: 25.03.2002 DE 20205087 U
(43) Veröffentlichungstag der Anmeldung: 01.10.2003
(73) Patentinhaber: Süddeutsche Aluminium Manufaktur GmbH, 89558 Böhmenkirch (DE)
(72) Erfinder: Binder, Hans, 89558 Böhmenkirch (DE); Schabel, Wolfgang, 73113 Ottenbach (DE)
(74) Vertreter: Grosse, Rainer

(56) Entgegenhaltungen:
- EP-A- 0 806 321
- WO-A-03/033305
- DE-C- 4 339 879

## Beschreibung

Die Erfindung betrifft ein Dach-Trägersystem für ein Kraftfahrzeug, insbesondere eine Dachreling oder eine Dachschiene, mit zwei, von außen auf das Fahrzeugdach schraubbaren Endteilen und einem zwischen diesen angeordneten Mittelteil.

Dach-Trägersysteme der genannten Art sind bekannt. Sie werden vorzugsweise bei Fahrzeugen ohne Stufenheck eingesetzt. Sofern diese Dach-Trägersysteme mit Abstand zum Fahrzeugdach verlaufen, bilden Sie eine Dachreling, sind sie direkt am Autodach ausgebildet, so sollen sie im Zuge dieser Anmeldung als Dachschiene bezeichnet werden. Am Dach-Trägersystem lassen sich weitere Einrichtungen, wie beispielsweise ein Skisarg, ein Fahrradträger usw. befestigen.

Ein bekanntes Trägersystem weist Endteile auf, die jeweils ein Grundteil aus Aluminiumguss besitzen, auf das ein verchromtes Kunststoffteil zur Abdeckung aufgeclipst wird. Bei abgenommener Abdeckung sind Befestigungslöcher in dem Grundteil zugänglich, so dass das Dach-Trägersystem von außen her mittels Schrauben auf das Autodach aufschraubbar ist. Nach dem Festschrauben werden die Abdeckungen auf die Grundteile geclipst, um so das gewünschte Design zu erzeugen. Die verchromten Abdeckungen sind sehr empfindlich, insbesondere kann sich die Verchromung partiell lösen, an den Endteilen können keine Einrichtungen befestigt werden, da dies die Kunststoffabdeckungen beschädigen würde und überdies ist das Verchromen der Kunststoffteile aufwendig und umweltbelastend. Hinzu kommt, dass ein derartiges Chrom-Design nicht stets den Verbrauchergeschmack trifft.

Ein anderes, gatungsgemäßes Dach-Trägersystem ist aus der DE 4339879 C bekannt. Das Material der Abdeckung wird nicht genannt.

Der Erfindung liegt die Aufgabe zugrunde, ein verbessertes Dach-Trägersystem für Kraftfahrzeuge zu schaffen.

Diese Aufgabe wird durch das Dach-Trägersystem des Anspruchs 1 gelöst. Die Endteile weisen jeweils mindestens eine Abdeckung auf, die aus Aluminium, insbesondere Aluminiumblech, besteht. Durch die Aluminium-Abdeckungen der Endteile wird ein ansprechendes Design erzeugt, das witterungs- und korrosionsbeständig ist. Aufwendige Beschichtungsverfahren, insbesondere umweltbelastende Chrombeschichtungen, entfallen. Insbesondere kann vorgesehen sein, dass die Abdeckung aus eloxiertem Aluminium besteht. Diese Ausgestaltung macht einen besonders wertigen Eindruck. Die Formgebung der Abdeckung wird durch Umformen geschaffen.

Das Grundteil und die Versteifung bilden -im Querschnitt gesehen- ein L-Profil oder ein T-Profil. Bei einem L-Profil bildet das Fußblech den einen Schenkel und das Versteifungsblech den anderen Schenkel des Profils. Bei einem T-Profil bildet das Fußblech den Querstrich des T's und das Versteifungsblech bildet den Längsstrich des T's.

Ferner ist es vorteilhaft, wenn die Abdeckung aus beschichtetem, insbesondere pulverbeschichtetem Aluminium besteht. Durch die Beschichtung lassen sich besondere Farbeindrücke erzeugen, wobei eine schwarze Beschichtung bevorzugt ist, die farblich zu jeder Lackfarbe des Fahrzeugs passt.

Nach der Erfindung ist vorgesehen, dass jedes Endteil ein Grundteil, insbesondere Fußblech, aus Aluminium aufweist, an dem die Abdeckung befestigt ist. Das Grundteil weist Befestigungslöcher oder andere Befestigungsmittel auf, um die Montage auf das Kraftfahrzeugdach von außen her vornehmen zu können. "Von außen her" heißt, dass beispielsweise die Schraubenköpfe von Befestigungsschrauben nicht vom Innenraum des Fahrzeugs her angezogen werden, sondern von außen her.

Nach einer Weiterbildung der Erfindung ist vorgesehen, dass die Abdeckung am Grundteil per lösbarer Clipsverbindung und/oder Rastverbindung gehalten ist. Eine derartige Befestigung ist montagefreundlich.

Ferner ist von Vorteil, wenn das Grundteil, insbesondere Fußblech, eine Versteifung aufweist, die einstückig mit dem Grundteil ausgebildet ist oder die auf die Innenseite des Grundteils geschweißt ist. Die Versteifung sorgt dafür, dass vom Endteil hohe Lasten aufgenommen werden können, ohne dass das Grundteil unzulässig stark elastisch verformt wird.

Die Versteifung kann insbesondere ein Aluminium-Versteifungsblech oder ein Magnesium-Versteifungsblech sein. In einem solchen Falle wird das Versteifungsblech -aufrecht stehend zur Ebene des Grundteils- am Grundteil befestigt, insbesondere verschweißt, bevorzugt laserverschweißt, wodurch ein formsteifes Profil geschaffen wird.

Von Vorteil ist, wenn an das Grundteil und/oder an die Versteifung ein Eingriffsstutzen für das Eingreifen in das als Hohlprofil ausgebildete Mittelteil geschweißt ist. Der Eingriffsstutzen kann vorzugsweise aus Aluminium oder Magnesium bestehen und derart profiliert sein, dass es den Hohlraum des als Hohlprofil ausgebildeten Mittelteils formangepasst im Einsteckbereich ausfüllt.

Die Außenseite des Grundteils und/oder der Versteifung ist zumindest im Sichtbereich eloxiert oder beschichtet ausgebildet. Das Grundteil weist bevorzugt einen Auflagebereich auf, mit dem es auf dem Fahrzeugdach aufliegt und geht in einen mit Abstand zum Fahrzeugdach liegenden Bogenbereich über. Dieser Bogenbereich ist im montierten Zustand sichtbar. Da der Sichtbereich eloxiert oder beschichtet ausgebildet ist, passt er sich dem übrigen Oberflächendesigns des Dach-Trägersystems an.

Schließlich kann das Grundteil randseitig mindestens eine Hintergriffstufe aufweisen, die der Befestigung der Abdeckung dient. Die Abdeckung weist mit der Hintergriffsstufe zusammenwirkende Haltemittel auf. Bei der Montage werden Hintergriffstufe und Haltemittel in Hintergriff gebracht. Hierzu wird die Abdeckung vorzugsweise in Längsrichtung verlagert. Dabei verrasten das Grundteil und Abdeckung miteinander.

Die Zeichnungen veranschaulichen die Erfindung anhand von Ausführungsbeispielen, und zwar zeigt:
- Figur 1: eine Übersichtsansicht einer Dachreling,
- Figur 2: den vorderen Bereich einer Dachreling in Explosionsdarstellung,
- Figur 3: einen Schnitt entlang der Linie A-A in Figur 2,
- Figur 4: einen Schnitt entlang der Linie B-B in Figur 2,
- Figur 5: einen Kopplungsbereich eines Endteils, zur Kopplung mit einem Mittelteil der Dachreling,
- Figur 6: einen Schnitt entlang der Linie A-A in Figur 5,
- Figur 7: eine Clipsverbindung für die Befestigung einer Abdeckung mit Federrastvorrichtung,
- Figur 8: eine Federrastvorrichtung nach einem anderen Ausführungsbeispiel,
- Figur 9: einen Verbindungsbereich zwischen einem Endteil und einem Mittelteil der Dachreling,
- Figur 10 bis 12: Bereiche eines Endteils mit Positionierlaschen für die mechanische Bearbeitung,
- Figur 13: ein weiteres Ausführungsbeispiel eines Endteils einer Dachreling,
- Figur 14: einen Schnitt entlang der Linie A-A in Figur 13 und
- Figur 15: einen Schnitt entlang der Linie B-B in Figur 13.

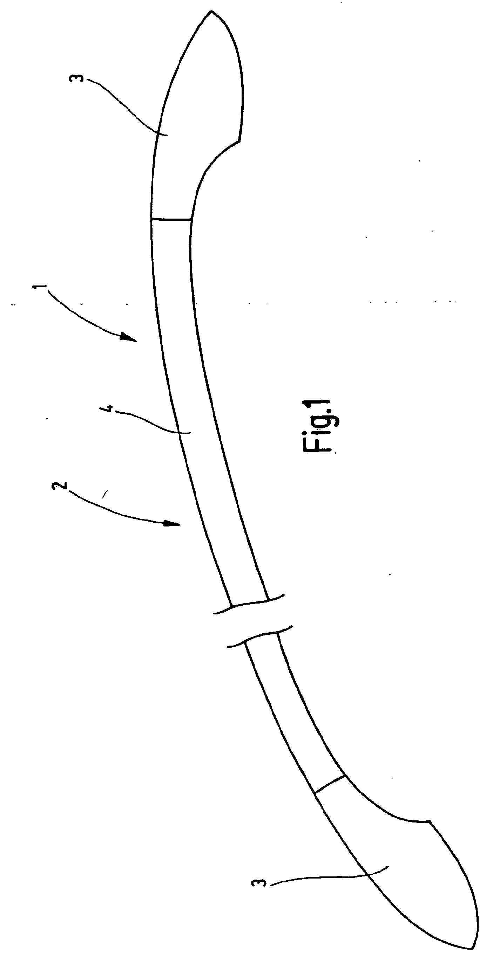

Die Figur 1 zeigt ein Dach-Trägersystem 1, das eine Dachreling 2 aufweist, wobei bevorzugt zwei derartiger Dachrelings parallel zueinander auf einem Dach eines nicht dargestellten Kraftfahrzeugs angeordnet werden.

Jede Dachreling 2 weist zwei Endteile 3 und ein zwischen diesen angeordnetes Mittelteil 4 auf. Das Mittelteil 4 ist aus Gründen der Übersichtlichkeit verkürzt in Figur 1 dargestellt.

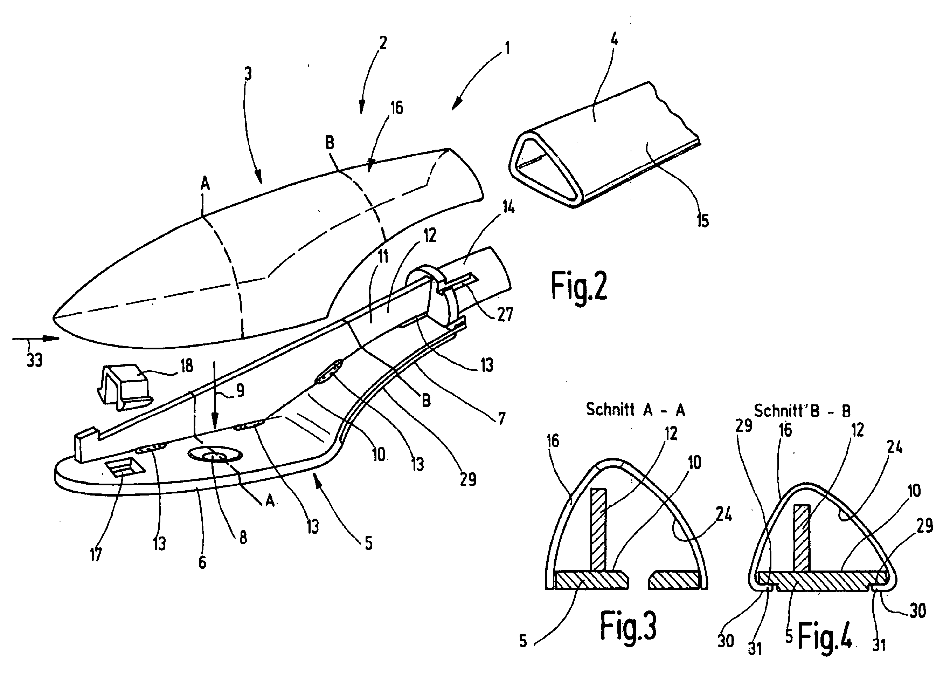

Gemäß Figur 2 weist das Endteil 3 ein Grundteil 5, insbesondere Fußblech 5', auf, das einen Auflagebereich 6 und einen Bogenbereich 7 besitzt. Auflagebereich 6 und Bogenbereich 7 sind einstückig miteinander ausgebildet. Mit dem Auflagebereich 6 liegt das Endteil 3 auf einem entsprechenden Teil des Daches des Kraftfahrzeugs auf. Der Auflagebereich 6 weist ein Befestigungsloch 8 auf, in das von außen her, also in Richtung des Pfeiles 9 ein Befestigungsmittel, beispielsweise eine Gewindeschraube, eingeführt und in eine entsprechende Gewindebüchse am Dach des Fahrzeugs eingeschraubt wird. Auf die Innenseite 10 des Grundteils 5 ist eine Versteifung 11 geschweißt, insbesondere lasergeschweißt. Die Versteifung 11 ist als Aluminium-Versteifungsblech 12 ausgebildet. Gemäß der Figuren 3 und 4 bildet das Aluminium-Versteifungsblech 12 mit dem Fußblech 5' einen Winkel, insbesondere einen rechten Winkel. Die beim Laserverschweißen entstehenden Schweißraupen sind in Figur 2 mit dem Bezugszeichen 13 gekennzeichnet. Durch die Ausbildung eines rechten Winkels zwischen dem Aluminium-Versteifungsblech 12 und dem Fußblech 5' ergibt sich gemäß der Figuren 3 und 4 ein T-Profil dieser Teile.

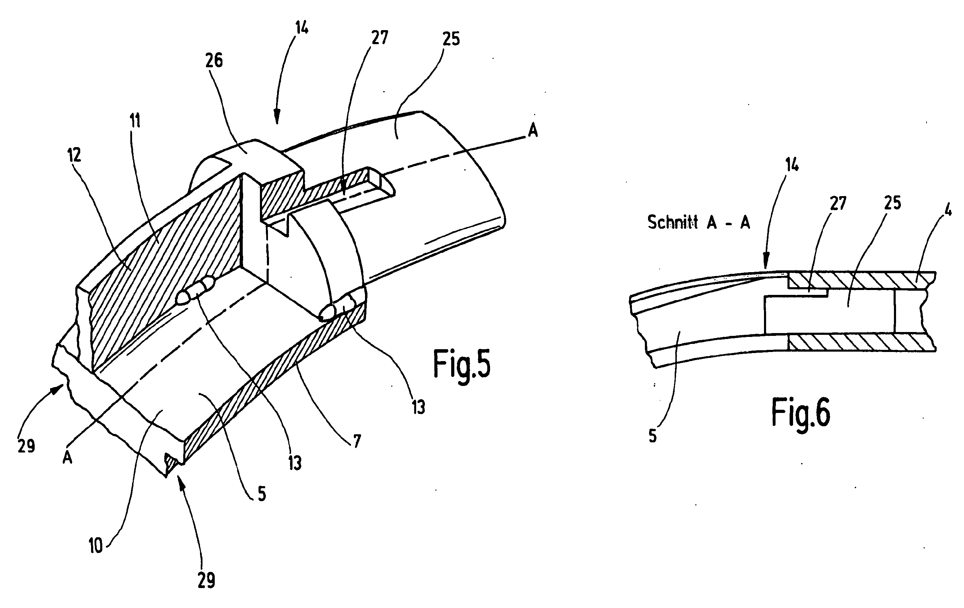

Das Aluminium-Versteifungsblech 12 ist integral mit einem Eingriffsstutzen 14 ausgebildet. Hierzu wird insbesondere auf die Figur 5 verwiesen. Alternativ ist es jedoch auch möglich, dass das Aluminium-Versteifungsblech 12 und Eingriffsstutzen 14 als separate, miteinander verschweißte Teile ausgebildet sind. In einem solchen Fall kann der Eingriffsstutzen 14 als Formteil, insbesondere Gussteil, ausgebildet sein. Auch hier wird bevorzugt laserverschweißt. Der Eingriffsstutzen 14 wird bei der Montage in das als Aluminium-Hohlprofil 15 ausgebildete Mittelteil 4 eingesteckt (Figur 2 zeigt den ausgesteckten, Figur 1 den eingesteckten Zustand). Zur Abdeckung der Innenseite 10 des Fußblechs 5 sowie zum Überfangen des nicht dargestellten Kopfes der Befestigungsschraube und auch des Aluminium-Versteifungsblechs 12 ist am Fußteil 5 eine haubenförmige Abdeckung 16 befestigt, die aus einem umgeformten Aluminiumblech gebildet ist. Auf die Details wird nachstehend eingegangen.

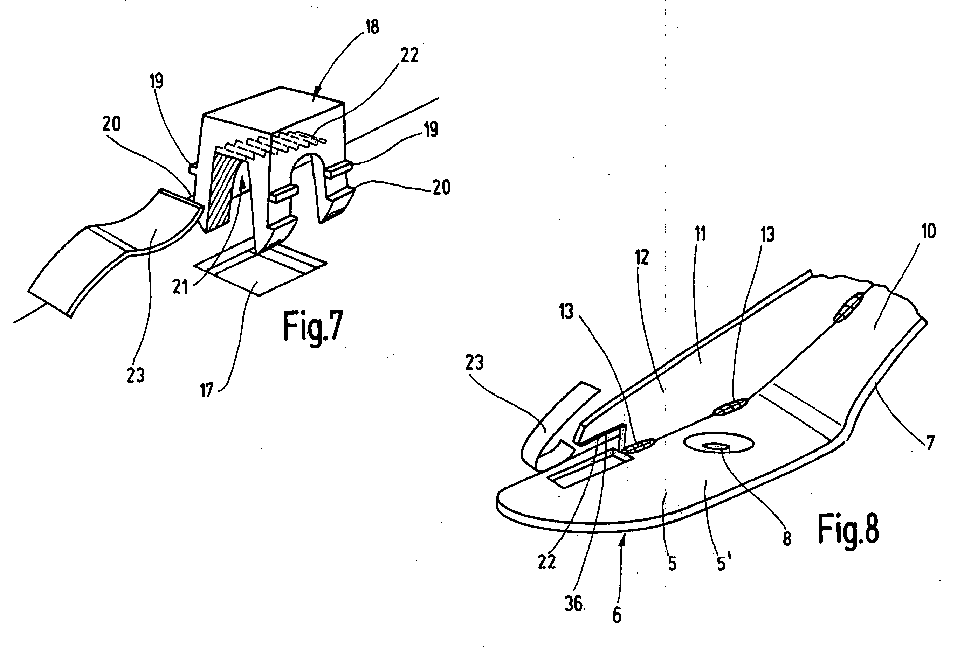

Gemäß Figur 2 ist das Aluminium-Versteifungsblech 12 sowohl mit der Innenseite 10 des Bogenbereichs als auch mit der Innenseite 10 des Auflagebereichs 10 verschweißt. Die verschweißte Kante der Versteifung 11 ist von der Formgebung her dem löffelähnlichen Profil des Fußblechs 5' angepasst. Das Fußblech 5' weist einen rechteckigen Durchbruch 17 auf, in dem ein Kunststoffclip 18 eingerastet wird. Dies ist insbesondere der Figur 7 zu entnehmen. Der Randbereich des Durchbruchs 17 wird im eingerasteten Zustand von Vorsprüngen 19, 20 des Kunststoffclips 18 überfangen, wodurch der Kunststoffclip 18 sicher und lösbar am Fußblech 5' gehalten ist. An seiner Unterseite 21 weist der tischähnlich gestaltete Kunststoffclip 18 eine Rastung 22 auf, die mit einer Federblechzunge 23 verrasten kann. Die Federblechzunge 23 ist an der Innenseite 24 (Figuren 3, 4) der Abdeckung 16 in geeigneter Weise befestigt, vorzugsweise verklebt.

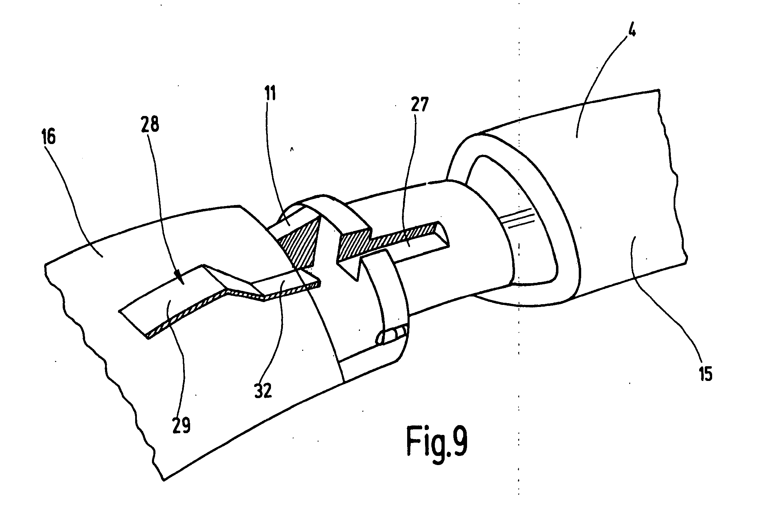

Gemäß Figur 5 weist der Eingriffstutzen 14 einen Eingriffsbereich 25 auf, der dem Querschnitt des Innern des Hohlprofils des Mittelteils 4 angepasst ist. Der Eingriffsbereich 25 geht in einen Flanschbereich 26 einstückig über, der nach dem Ausführungsbeispiel der Figur 5, einstückig mit dem Aluminium-Versteifungsblech 12 in Verbindung steht. Der Flanschbereich 26 ist mittels Schweißraupen 13 mit dem Fußblech 5' laserverschweißt. Eine Ausnehmung 27 durchsetzt den Flanschbereich 26 und ein Teilstück des Eingriffsbereichs 25. Die Ausnehmung 27 dient der Aufnahme einer gekröpft ausgebildeten Stahlfeder 28, die aus der Figur 9 hervorgeht. Die Stahlfeder 28 ist mit einem Endbereich 29 an der Innenseite 24 der Abdeckung 16 befestigt, insbesondere verklebt.

Gemäß der Figuren 2 und 4 weist der Bogenbereich 7 beidseitig randseitig jeweils eine Hintergriffstufe 29 auf. An der Abdeckung 16 sind entsprechende Haltemittel 30 in Form von umgekanteten Seitenrändern 31 ausgebildet.

Bei der Herstellung und Montage des Dachträger-Systems 1 wird wie folgt vorgegangen. Nachdem Fußblech 5' und Aluminium-Versteifungsblech 12 sowie Flanschbereich 26 miteinander verschweißt wurden, wird der Kunststoffclip 18 in den Durchbruch 17 eingeclipst. Federblechzunge 23 und Stahlfeder 28 werden an die Abdeckung 16 geklebt. Der Eingriffsstutzen 14 wird mit seinem Eingriffsbereich 25 in das Innere des im Extruderverfahren hergestellten Mittelteils 4 eingesteckt und verklebt. In entsprechender Weise wird am anderen Endbereich des Mittelteils 4 ein weiteres Endteil 3 befestigt. Die so gebildete Dachrehling 2 wird mit Befestigungsschrauben, die die Befestigungslöcher 8 der Endteile 3 durchgreifen, an dem Dach eines Fahrzeugs befestigt. Anschließend werden die Abdeckungen 16 auf den Endteilen 3/Grundteilen 5 befestigt. Dies erfolgt dadurch, dass der freie Endbereich 32 (Figur 9) der Stahlfeder 4 in die Ausnehmung 27 eingeschoben wird. Hierbei werden die Seitenränder 41 in Hintergriff mit den Hintergriffsstufen 29 gebracht. Durch die dabei erfolgende Einschubbewegung (Pfeil 33 in Figur 2) rastet die Federblechzunge 23 in die Rastung 22 des Kunststoffclips 18 ein. Am Ende der Einschubbewegung greift das freie Ende der Federblechzunge 23 in die entsprechende Rastvertiefung der Rastung 22 und hält auf diese Art und Weise die Abdeckung 16.

In Figur 6 ist im Verbindungsbereich von Endteil 3 und Mittelteil 4 der zusammengesteckte Zustand dieser Teile gezeigt, wobei die Abdeckung 16 noch nicht aufgebracht ist.

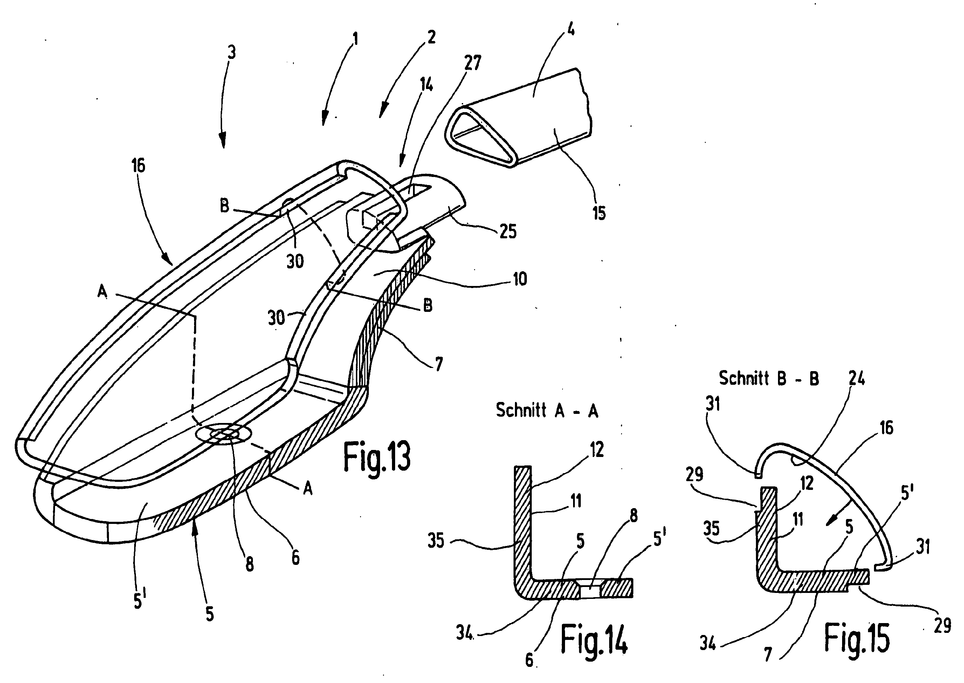

Die Figuren 13 bis 15 zeigen ein weiteres Ausführungsbeispiel eines Dachträger-Systems 1, das sich von dem Dachträger-System 1 der vorhergehenden Figuren lediglich im Hinblick auf die Ausgestaltung des Grundteils 5, insbesondere Fußblechs 5', und die Abdeckung 16 unterscheidet. Wie den Figuren 14 und 15 zu entnehmen ist, ist das Fußblech 5' L-förmig durch Kantung ausgebildet, wobei der eine Schenkel 34 das Fußblech 5' bildet und der andere Schenkel 35 das Aluminiumversteifungsblech 12. Mithin sind diese Teile einstückig miteinander ausgebildet. Die Abdeckung 16 ist -nicht wie in den Ausführungsbeispielen der Figuren 3 und 4 etwa im Querschnitt U-förmig ausgebildet-, sondern im Wesentlichen bogenförmig (Figur 15), das heißt, die L-Form von Fußblech 5' und Versteifung 11 wird durch eine entsprechende Bogenform der Abdeckung 16 ergänzt, so dass insgesamt ein Hohlbereich im Innern dieser Teile ausgebildet wird, um dort den Kopf einer nicht dargestellten Befestigungsschraube aufzunehmen, die das Befestigungsloch 8 im Auflagebereich 6 durchgreift. Der Bogenbereich 7 nebst zugehörigen Bereich der Versteifung 11 weist beidseitig Hintergriffsstufen 29 auf, die mit entsprechenden Haltemitteln 30 der Abdeckung 16, nämlich umgekantete Seitenränder 31, zusammenwirken. Aus Gründen der Vereinfachung sind die weiteren Befestigungsmittel zum Halten der Abdeckung 16 nicht wiedergegeben.

Die Figur 8 zeigt ein Ausführungsbeispiel, bei dem kein Kunststoffclip 18 zum Einsatz gelangt, vielmehr weißt das Aluminiumversteifungsblech 12 eine Untergriffskante 36 mit Rastung 22 auf, mit der die bogenförmig ausgebildete Federblechzunge der Abdeckung 16 zusammenwirkt.

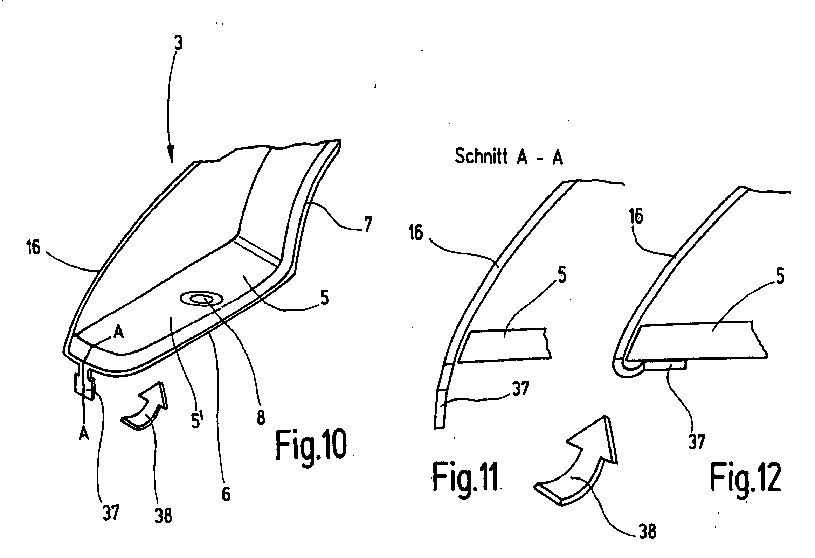

Aus den Figuren 10 bis 12 geht ein Ausführungsbeispiel hervor, bei dem die Abdeckung 16 mit mindestens einer Positionierlasche 37 ausgestaltet ist, die entsprechend Pfeil 38 derart umgebogen wird, dass sie auf der Unterseite des Fußblechs 5' liegt. Die Positionierlasche 37 dient dem temporären Halten der Abdeckung 16. Nach einem Schleifvorgang der Abdeckung 16 wird die Positionierlasche 37 abgetrennt.

Insgesamt ist bei den Ausführungsbeispielen des Dach-Trägersystems 1 vorgesehen, dass das Grundteil 5, insbesondere Fußblech 5', die Abdeckung 16 und das Mitteltel 4 aus Aluminium, vorzugsweise eloxiertem Aluminium bestehen. Bevorzugt sind Versteifung 11 und Eingriffstutzen 14 ebenfalls aus Aluminium erstellt. Anstelle von Aluminium kann auch Magnesium verwendet werden. Auch ist es denkbar, bestimmte Teile aus Aluminium und andere Teile aus Magnesium herzustellen. Die Abdeckung und das Grundteil bestehen jedoch inner aus Aluminium. Anstelle der Eloxierung ist es auch möglich, das Aluminium zu beschichten, vorzugsweise pulverzubeschichten. Durch die Erstellung der Abdeckung 16 als Aluminiumblechteil ist eine hohe Haltbarkeit und eine optisch ansprechende Gestaltung gewährleistet. Das Aluminiumblech kann zur Erstellung der haubenähnlichen Form beziehungsweise L-Form umgeformt sein. Da die Außenseite des Bogenbereichs 7 des Fußblechs 5 einen Sichtbereich bildet, wird insbesondere auch diese Zone eloxiert ausgebildet oder dieser Bereich des Aluminiums wird mit einer Beschichtung, insbesondere Pulverbeschichtung, versehen. Bei einer beschichteten Ausführung ist bevorzugt auch das Mittelteil 4 sowie auch die Abdeckung 16 mit Beschichtung versehen.

## Patentansprüche

1. Dach-Trägersystem für ein Kraftfahrzeug, insbesondere eine Dachreling oder eine Dachschiene, mit zwei Endteilen und einem zwischen diesen angeordneten Mittelteil, wobei die Endteile (3) jeweils mindestens eine Abdeckung (16) aufweisen, jedes der Endteile (3) ein Grundteil (5) aus Aluminium aufweist, an dem die Abdeckung (16) befestigt ist, und zur von außen auf das Kraftfahrzeugdach erfolgender Schraubfestlegung der Endteile (3) jedes Grundteil (5) mindestens ein von der Abdeckung (16) überfangendes Befestigungsloch (8) aufweist, **dadurch gekennzeichnet, dass** die Abdeckung aus Aluminium, insbesondere Aluminiumblech, besteht, und das Grundteil (5) eine Versteifung (11) derart aufweist, dass Grundteil (5) und Versteifung (11) im Querschnitt ein L-Profil oder eine T-Profil bilden.

2. Trägersystem nach Anspruch 1, **dadurch gekennzeichnet, dass** die Abdeckung (16) aus eloxiertem Aluminium besteht.

3. Trägersystem nach einem der vorhergehenden Ansprüche, **dadurch gekennzeichnet, dass** die Abdeckung aus beschichtetem, insbesondere puiverbeschichtetem Aluminium besteht.

4. Trägersystem nach einem der vorhergehenden Ansprüche, **dadurch gekennzeichnet, dass** die Abdeckung (16) am Grundteil (5), insbesondere Fußblech (5'), per lösbarer Clipsverbindung oder Rastverbindung gehalten ist.

5. Trägersystem nach einem der vorhergehenden Ansprüche, **dadurch gekennzeichnet, dass** die Versteifung (11) ein Aluminium-Versteifungsblech (12) oder Magnesium-Versteifungsblech ist.

6. Trägersystem nach einem der vorhergehenden Ansprüche, **dadurch gekennzeichnet, dass** an das Grundteil (5) und/oder die Versteifung (11) ein Eingriffsstutzen (14) für das Eingreifen in das als Hohlprofil ausgebildete Mittelteil (4) geschweißt, insbesondere lasergeschweißt, ist.

7. Trägersystem nach einem der vorhergehenden Ansprüche, **dadurch gekennzeichnet, dass** die Außenseite des Grundteils (5) und/oder der Versteifung (11) zumindest im Sichtbereich eloxiert oder beschichtet ist.

8. Trägersystem nach einem der vorhergehenden Ansprüche, **dadurch gekennzeichnet, dass** das Grundteil (5), insbesondere Fußblech (5'), randseitig mindestens eine Hintergriffsstufe (9) für die Abdeckung (16) und dass die Abdeckung (16) mit der Hintergriffsstufe (29) zusammenwirkende Haltemittel (30) aufweist.

9. Trägersystem nach einem der vorhergehenden Ansprüche, **dadurch gekennzeichnet, dass** die Grundteile (5) als Fußbleche (5') ausgebildet sind.

10. Trägersystem nach einem der vorhergehenden Ansprüche, **dadurch** gekennzeichet, dass die Versteifung (11) einstückig mit dem Grundteil (5) ausgebildet ist oder auf die Innenseite (10) des Grundteils (5) geschweißt, vorzugsweise lasergeschweißt, ist.

## Claims

1. A roof rack for a vehicle, in particular a roof railing or a roof bar, with two end sections and one central section arranged therebetween, wherein the end sections (3) comprise at least one cover (16) each, each of the end sections (3) comprises a base section (5) of aluminum to which the cover (16) is attached, and each base section (5) comprises at least one mounting hole (8) that is covered by the covering (16) to allow location of the end sections (3) onto the roof of the vehicle from outside by means of screws, **characterized in that** the cover is made of aluminum, particularly sheet aluminum, and the base section (5) comprises a web (11) such that, as seen from a cross-sectional view, the base section (5) and the web (11) form an L-profile or a T-profile.

2. A rack according to claim 1, **characterized in that** the cover (16) is made of anodized aluminum.

3. A rack according to anyone of the preceding claims, **characterized in that** the cover is made of coated, particularly powder-coated aluminum.

4. A rack according to anyone of the preceding claims, **characterized in that** the cover (16) is held to the base section (5), in particular the base plate (5'), by means of a removable clip connection or snap-in connection.

5. A rack according to anyone of the preceding claims, **characterized in that** the web (11) is an aluminum stiffening plate (12) or a magnesium stiffening plate.

6. A rack according to anyone of the preceding claims, **characterized in that** an engagement piece (14) to engage the central section (4) is welded, particularly laser-welded, to the base section (5) and/or the web (11), wherein said central section (4) is formed as a hollow section.

7. A rack according to anyone of the preceding claims, **characterized in that** the outside of the base section (5) and/or the web (11) is anodized or coated at least in its exposed region.

8. A rack according to anyone of the preceding claims, **characterized in that** the base section (5), in particular the base plate (5'), comprises at its edge at least one back-engagement step (29) for the cover (16) and that the cover (16) comprises holding means (30) cooperating with the back-engagement step (29).

9. A rack according to anyone of the preceding claims, **characterized in that** the base sections (5) are formed as base plates (5').

10. A rack according to anyone of the preceding claims, **characterized in that** the web (11) is formed integrally with the base section (5) or is welded, preferably laser-welded, to the base section (5) on the latter's inside (10).

## Revendications

1. Porte-bagages de toit pour un véhicule automobile, en particulier une rambarde de toit ou un rail de toit, comprenant deux parties d'extrémité et une partie centrale disposée entre celles-ci, les parties d'extrémité (3) présentant chacune au moins un recouvrement (16), chacune des parties d'extrémité (3) présentant une partie de base (5) en aluminium, sur laquelle le recouvrement (16) est fixé, et chaque partie de base (5) présentant au moins un trou de fixation (8) doublé par le recouvrement (16) pour la fixation par vis des parties d'extrémité (3) s'effectuant par l'extérieur sur le toit du véhicule automobile, **caractérisé en ce que** le recouvrement est en aluminium, en particulier en tôle d'aluminium, et la partie de base (5) présente un renforcement (11) de telle sorte que la partie de base (5) et le renforcement (11) forment en section un profilé en L ou un profilé en T.

2. Porte-bagages selon la revendication 1, **caractérisé en ce que** le recouvrement (16) est à base d'aluminium anodisé.

3. Porte-bagages selon l'une quelconque des revendications précédentes, **caractérisé en ce que** le recouvrement est à base d'aluminium recouvert, en particulier recouvert par poudre.

4. Porte-bagages selon l'une quelconque des revendications précédentes, **caractérisé en ce que** le recouvrement (16) est tenu sur la partie de base (5), en particulier la tôle inférieure (5'), par un assemblage clipsé amovible ou un assemblage à encliquetage.

5. Porte-bagages selon l'une quelconque des revendications précédentes, **caractérisé en ce que** le renforcement (11) est une tôle de renfort en aluminium (12) ou une tôle de renfort en magnésium.

6. Porte-bagages selon l'une quelconque des revendications précédentes, **caractérisé en ce qu'**une tubulure d'engagement (14) pour l'engagement dans la partie centrale (4) se présentant sous la forme d'un profilé creux est soudée, en particulier soudée par laser, sur la partie de base (5) et/ou le renforcement (11).

7. Porte-bagages selon l'une quelconque des revendications précédentes, **caractérisé en ce que** le côté extérieur de la partie de base (5) et/ou du renforcement (11) est anodisé ou recouvert au moins dans la zone visible.

8. Porte-bagages selon l'une quelconque des revendications précédentes, **caractérisé en ce que** la partie de base (5), en particulier la tôle inférieure (5'), présente côté pourtour au moins un niveau d'engagement par l'arrière (9) pour le recouvrement (16) et **en ce que** le recouvrement (16) présente des moyens de retenue (30) coopérant avec le niveau d'engagement par l'arrière (29).

9. Porte-bagages selon l'une quelconque des revendications précédentes, **caractérisé en ce que** les parties de base (5) se présentent sous la forme de tôles inférieures (5').

10. Porte-bagages selon l'une quelconque des revendications précédentes, **caractérisé en ce que** le renforcement (11) est conçu d'une seule pièce avec la partie de base (5) ou est soudé, de préférence soudé par laser, sur le côté intérieur (10) de la partie de base (5).
